# EUROPÄISCHE PATENTSCHRIFT

(11) **EP 1 739 036 B1**
(45) Veröffentlichungstag und Bekanntmachung des Hinweises auf die Patenterteilung: **23.04.2008**
(21) Anmeldenummer: 05014325.4
(22) Anmeldetag: 01.07.2005
(51) Int. Cl.: B65G 47/244, B65G 47/84, B65H 5/08

(54) **Vorrichtung zum Fördern und Drehen von Gegenständen**
Device for conveying and turning articles
Dispositif pour transporter et tourner des articles

(43) Veröffentlichungstag der Anmeldung: 03.01.2007
(73) Patentinhaber: Seidel, Helmut, 65396 Walluf (DE)
(72) Erfinder: Seidel, Jens, 55124 Mainz (DE)
(74) Vertreter: Quermann, Helmut

(56) Entgegenhaltungen:
- EP-A- 0 769 459
- EP-A- 1 020 359
- US-A1- 2003 010 438

## Beschreibung

Die Erfindung betrifft eine Vorrichtung zum Fördern und Drehen von Gegenständen, insbesondere von quaderförmigen Gegenständen, um eine vertikale Achse, insbesondere zum Drehen von Gegenständen um 90°, mit einer ersten Fördereinrichtung zum Fördern der Gegenstände in den Bereich mindestens einer Förder-Dreh-Station, der Förder-Dreh-Station zum Fördern und Drehen der Gegenstände und einer zweiten Fördereinrichtung zum Fördern der Gegenstände aus dem Bereich der Förder-Dreh-Station, wobei die Förder-Dreh-Station einen horizontal umlaufenden Förderer und mindestens eine von diesem aufgenommene Dreheinrichtung aufweist, sowie die jeweilige Dreheinrichtung Mittel zum Kontaktieren und Drehen eines der Gegenstände aufweist, ferner mit einem elektrischen Antrieb für die Förder-Dreh-Station.

Eine solche Vorrichtung zum Fördern und Drehen von Gegenständen, insbesondere von Faltschachteln um eine vertikale Achse, insbesondere zum Drehen von Gegenständen um 90°, ist aus der EP 1 020 359 A2 bekannt. ― Diese weist eine einzige Förder-Dreh-Station (dort Dreheinrichtung genannt), sowie eine Vielzahl von Dreheinrichtungen auf.

Bei der bekannten Vorrichtung werden die Gegenstände in konstantem Abstand der Förder-Dreh-Station zugeführt, sodass sie kontinuierlich, bei unveränderlicher Umlaufgeschwindigkeit des horizontal umlaufenden Förderers, mittels der Mittel zum Kontaktieren erfasst und um 90° gedreht werden können. Die Mittel zum Kontaktieren weisen Saugelemente auf, die an eine zentrale Luftversorgung für alle Saugelemente der Förder-Dreh-Station angeschlossen sind. Die mittels der ersten Fördereinrichtung einer zwischen dieser und der zweiten Fördereinrichtung angeordneten weiteren Fördereinrichtung zugeförderten Gegenstände werden im Bereich der weiteren Fördereinrichtung von dieser mittels der Saugelemente abgenommen und in angehobenem Zustand um 90° gedreht, sodass sie am Ende der weiteren Fördereinrichtung gedreht wieder auf diese abgesetzt werden können. Mittels der zweiten Fördereinrichtung werden die Gegenstände abgefördert.

Bei dieser bekannten Vorrichtung sind die Mittel zum Drehen der Gegenstände über eine stationäre Kulissenführung ansteuerbar und es werden auch die Mittel zum Kontaktieren der Gegenstände über eine andere stationäre Kulissenführung abgesenkt und angehoben. Ein solches, in der EP 1 020 359 A2 gezeigtes Funktionsprinzip der Förderdrehstation, ist grundsätzlich auch auf die vorliegende Erfindung anwendbar. Da dieses Prinzip nicht erfindungswesentlich ist, wird nachfolgend nicht näher hierauf eingegangen.

Aufgabe der vorliegenden Erfindung ist es, eine Vorrichtung der eingangs genannten Art so weiterzubilden, dass mit dieser auch in unregelmäßigen Abständen der Förder-Dreh-Station zugeförderte Gegenstände sicher, während des weiteren Fördervorganges, gedreht werden können.

Gelöst wird die Aufgabe durch eine Vorrichtung der eingangs genannten Art, die durch folgende Merkmale gekennzeichnet ist:
- die Vorrichtung weist zwei nebeneinander angeordnete Förder-Dreh-Stationen zum abwechselnden Fördern der Gegenstände entlang derselben Förderstrecke auf,
- jede Förder-Dreh-Station ist mittels eines eigenen, in der Drehzahl regelbaren Elektromotors antreibbar,
- im Zugangsbereich der Förder-Dreh-Stationen ist eine Einrichtung zum Erfassen der Position des nächsten, von der jeweiligen Förder-Dreh-Station zu kontaktierenden und zu fördernden Gegenstandes angeordnet, wobei die Erfassungseinrichtung die Elektromotoren derart ansteuert, dass bei Erfassung eines vorlaufenden Gegenstands die Erfassungseinrichtung den einen Elektromotor, bei Erfassung des diesem vorlaufenden Gegenstand unmittelbar nachfolgenden Gegenstands die Erfassungseinrichtung den anderen Elektromotor ansteuert.

Ein erster Gegenstand wird somit über die erste Fördereinrichtung den beiden Förder-Dreh-Stationen zugefördert, wobei ein zweiter Gegenstand, und sinngemäß diesem ein dritter, vierter Gegenstand in durchaus unterschiedlichem Abstand folgt. Gelangt der erste Gegenstand in den Bereich der beiden Förder-Dreh-Stationen, die bezogen auf die Förderrichtung des Gegenstands nebeneinander angeordnet sind, erfasst die Erfassungseinrichtung den Gegenstand, insbesondere dessen vorlaufende Kontur. Die Erfassungseinrichtung, die insbesondere als Lichtschranke ausgebildet ist, steuert daraufhin den Elektromotor derjenigen der beiden Förder-Dreh-Stationen an, deren Dreheinrichtung sich in einer Wartestellung benachbart des Gegenstandes befindet. Bei der Ansteuerung des Elektromotors dieser Förder-Dreh-Station wird der Elektromotor auf die gewünschte Drehzahl und damit der Förderer dieser Förder-Dreh-Station auf die gewünschte Umlaufgeschwindigkeit gebracht, die mit der Fördergeschwindigkeit des Gegenstandes, die ihm durch die erste Fördereinrichtung verliehen wird, entspricht, womit eine Synchronisation der Bewegungen stattfindet. Während dieses Vorganges wird somit die Dreheinrichtung mittels des horizontal umlaufenden Förderers in die Förderstrecke des Gegenstandes eingeschwenkt und es erfolgt während der Synchronisationsphase das Absenken, sodass die Dreheinrichtung den Gegenstand kontaktiert. Es kann sich eine Beschleunigungsphase anschließen, um dann die Drehung der Dreheinrichtung herbeizuführen, mit der Konsequenz, dass der Gegenstand entsprechend mitgedreht wird. Bei diesem Gegenstand handelt es sich vorzugsweise um einen quaderförmigen Gegenstand, insbesondere eine Faltschachtel. Es sind aber grundsätzlich auch andere Formen von Gegenständen denkbar, die einer Förderung und Drehung zugänglich sind.

Bevorzugt unmittelbar zu dem Zeitpunkt, zu dem die Dreheinrichtung der einen Förder-Dreh-Station den Gegenstand übernommen hat, wird die diesem Bereich nächstliegende Dreheinrichtung der anderen Förder-Dreh-Station in eine der Warteposition der ersten Förder-Dreh-Station entsprechende Warteposition durch Antreiben des dieser Station zugeordneten umlaufenden Förderers gebracht. Erfasst die Erfassungseinrichtung den zweiten mittels der ersten Fördereinrichtung zugeförderten Gegenstand, wird über die Erfassungseinrichtung der Elektromotor der zweiten Förder-Dreh-Station angesteuert und über deren umlaufenden Förderer die in Wartestellung befindliche Dreheinrichtung zwecks Kontakt mit dem zweiten Gegenstand und anschließender Drehung, wie zum ersten Gegenstand beschrieben, bewegt.

Es ist somit bei der erfindungsgemäßen Vorrichtung nicht erforderlich, die Gegenstände in definiertem Abstand zueinander der Förder-Dreh-Station bzw. den Förder-Dreh-Stationen zuzufördern; das Zufördern der Gegenstände kann in beliebigem Abstand erfolgen.

Es wird als bevorzugt angesehen, wenn jede Förder-Dreh-Station nur zwei Dreheinrichtungen aufweist. Die beiden Dreheinrichtungen der jeweiligen Förder-Dreh-Station weisen insbesondere denselben Abstand, bezogen auf die Umlaufstrecke des Förderers ,voneinander auf. Hat die jeweilige Förder-Dreh-Station mit der einen Dreheinrichtung den Bereich der zweiten Fördereinrichtung erreicht, befindet sich die andere Dreheinrichtung dieser Förderdrehstation bereits in der Wartestellung, sodass, unter Berücksichtigung der beiden vorhandenen Drehstationen immer eine Dreheinrichtung in Wartestellung bereit ist, um einen von der Erfassungseinrichtung erfassten Gegenstand zu fördern und zu drehen.

Gemäß einer besonderen Ausführungsform der Erfindung ist vorgesehen, dass der jeweilige Elektromotor zum Antreiben der Förder-Dreh-Station als Servomotor ausgebildet ist, insbesondere als Servomotor mit einem Absolutwertgeber. Ein Servomotor kann hoch dynamisch angesteuert werden und ermöglicht somit quasi ein beliebiges Laufverhalten des jeweiligen horizontal umlaufenden Förderers, somit eine optimale Synchronisation der Bewegungen von Dreheinrichtungen und Gegenstand und überdies eine gegebenenfalls gewünschte Beschleunigung des von der Dreheinrichtung kontaktierten Gegenstandes. Der Absolutwertgeber ermöglicht selbst bei stillstehender Anlage eine Information über die Position des Förderers.

Die erste Fördereinrichtung ist insbesondere mittels eines Elektromotors antreibbar, vorzugsweise mittels eines in der Drehzahl regelbaren Elektromotors antreibbar. Es handelt sich insbesondere um einen Asynchronmotor. Der Motor ist frequenzgeregelt, beispielsweise in einem Frequenzbereich von 8,7 bis 87 Hz regelbar. Auch die zweite Fördereinrichtung wird vorzugsweise mittels eines in der Drehzahl regelbaren Elektromotors angetrieben.

Gemäß einer bevorzugten Ausgestaltung der Erfindung ist vorgesehen, dass die erste Fördereinrichtung und/oder die zweite Fördereinrichtung als Förderband, insbesondere als beanstandet angeordnete Förderriemen ausgebildet ist. Die Gegenstände werden somit, auf zwei im Abstand zueinander angeordneten Förderriemen liegend, der Förder-Dreh-Station zugeführt und über eine entsprechend der ersten Fördereinrichtung ausgebildete zweite Fördereinrichtung abgefördert.

Es wird als besonders vorteilhaft angesehen, wenn zwischen der ersten Fördereinrichtung und der zweiten Fördereinrichtung eine Platte angeordnet ist, wobei im Bereich der Platte das Drehen des jeweiligen Gegenstandes erfolgt, insbesondere bei auf der Platte aufliegenden Gegenstand erfolgt. Grundsätzlich bestünde aber auch die Möglichkeit, über Saugeinrichtungen nicht nur den Kontakt zwischen der Dreheinrichtung und dem Gegenstand herzustellen, sondern zusätzlich Unterdruck an die Saugeinrichtungen anzulegen, insbesondere durch Anlegen von Unterdruck den jeweiligen Gegenstand anzuheben, sodass er während der Drehung auf keiner Unterlage aufliegt. Bei Verwendung einer Platte, somit bei Drehung des Gegenstandes auf der Unterlage, ist es in aller Regel nicht erforderlich, Sauger vorzusehen, denen extern Unterdruck zugeführt wird. Es reicht die geringe Saugkraft beim Absenken der Sauger auf den Gegenstand aus, um eine Drehbewegung in den Gegenstand einzuleiten. Vorzugsweise sind zwei mit dem jeweiligen Gegenstand in Kontakt bringbare Sauger vorgesehen. Unabhängig davon, wie das Drehen des Gegenstands erfolgt, wobei durchaus ein greifendes Kontaktieren in Frage kommen kann, wird der jeweilige Gegenstand vorzugsweise um eine vertikale Achse gedreht, die durch den Schwerpunkt des Gegenstands bzw. den Gesamtschwerpunkt des Gegenstandes und eines von diesem aufgenommenen Produkts verläuft.

Weitere Merkmale der Erfindung sind in den Unteransprüchen, der Beschreibung der Figuren und in den Figuren selbst dargestellt, wobei bemerkt wird, dass alle Einzelmerkmale und alle Kombinationen von Einzelmerkmalen erfindungswesentlich sind.

In den Figuren ist die Erfindung anhand eines bevorzugten Ausführungsbeispiels dargestellt, ohne hierauf beschränkt zu sein. Es stellt dar:
- Figur 1: eine Seitenansicht der erfindungsgemäßen Vorrichtung zum Fördern und Drehen von Gegenständen,
- Figur 2: eine Ansicht X der beiden in der Figur 1 gezeigten Förder-Dreh-Stationen mit der unterhalb dieser angeordneten Platte zur Aufnahme der Gegenstände,
- Figur 3: in einer Draufsicht einer Funktionsdarstellung zur Verdeutlichung der Wirkungsweise der beiden Förder-Dreh-Stationen.

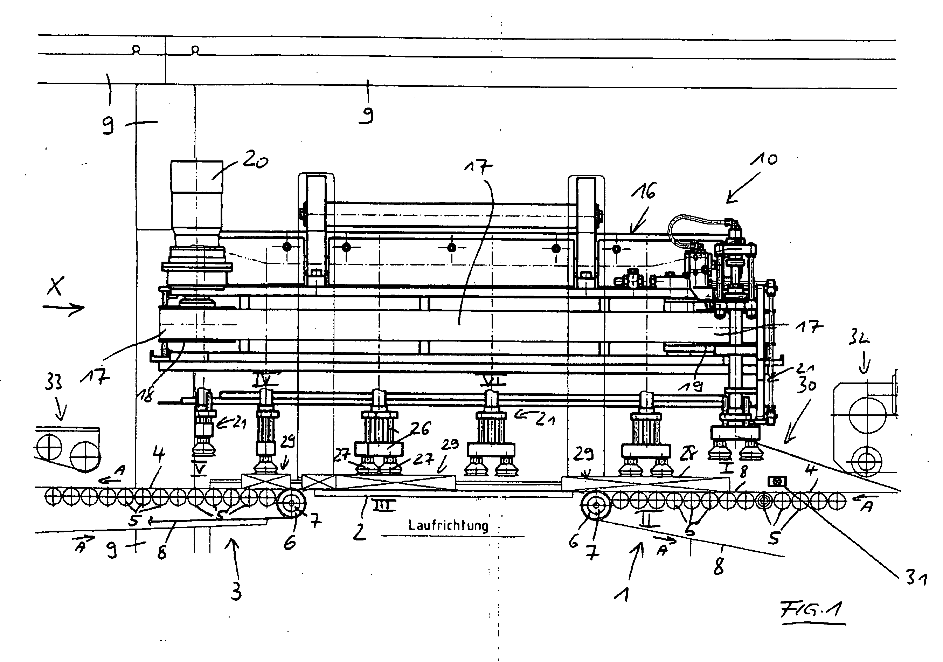

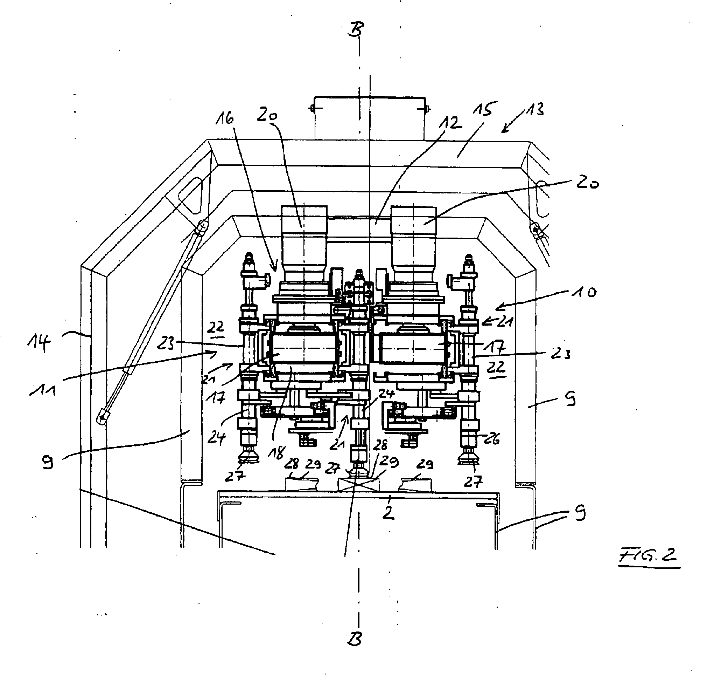

Der Aufbau der erfindungsgemäßen Vorrichtung zum Fördern und Drehen von Gegenständen wird zunächst anhand der Darstellung der Figuren 1 und 2 erläutert:

Veranschaulicht ist eine erste Fördereinrichtung 1, eine nachfolgend der ersten Fördereinrichtung 1 angeordnete, sich unmittelbar anschließende Platte 2 sowie eine sich in Förderrichtung unmittelbar an die Platte anschließende zweite Fördereinrichtung 3. Die beiden Fördereinrichtungen 1 und 3 und die Platte 2 besitzen dieselbe horizontal angeordnete Aufnahmeebene 4.

Die erste Fördereinrichtung 1 weist eine Vielzahl parallel zueinander und benachbart zueinander angeordneter Tragrollen 5 sowie eine benachbart der Platte 2 angeordnete, angetriebene Umlenkrolle 6 auf. Angetrieben wird die Umlenkrolle 6 mittels eines in der Drehzahl regelbaren Elektromotors 7, der als in der Frequenz regelbarer Asynchronmotor ausgebildet ist. Er lässt sich beispielsweise in einen Frequenzbereich von 8,7 bis 87 Hz regeln. Die erste Fördereinrichtung 1 weist zwei Förderriemen 8 auf, die im Abstand zueinander angeordnet sind. Das der Umlenkrolle 6 abgewandte Ende der ersten Fördereinrichtung 1 ist nicht veranschaulicht.

Die Platte 2 ist stationär angeordnet.

Die zweite Fördereinrichtung 3 ist ähnlich der ersten Fördereinrichtung 1 ausgebildet, weist somit eine Vielzahl nebeneinander angeordneter Tragrollen 5, eine angetriebene Umlenkrolle 6 und einen Asynchronmotor 7, ferner zwei in Abstand zueinander angeordnete Förderriemen 8 auf. Das der Umlenkrolle 6 der zweiten Fördereinrichtung 3 abgewandte Ende dieser Förderrichtung ist nicht veranschaulicht.

Die Laufrichtung der Förderriemen 8 der beiden Fördereinrichtungen 1 und 3 ist mit dem Pfeil A veranschaulicht.

Die erste Fördereinrichtung 1, die Platte 2 und die zweite Fördereinrichtung 3 sind in einem gemeinsamen Maschinengestell 9 gelagert.

Oberhalb der Platte 2 und oberhalb der der Platte 2 zugewandten Endbereiche der ersten Fördereinrichtung 1 und der zweiten Fördereinrichtung 3 sind zwei nebeneinander angeordnete Förderdrehstationen 10 und 11 angeordnet. Diese sind symenetrisch bezüglich der Ebene B-B, die senkrecht zur Zeichnungsebene gemäß der Figur 2 verläuft, gestaltet. Gelagert sind die beiden Stationen 10 und 11 über einen oberen Träger 12 im Maschinengestell 9. Dieses Maschinengestell 9 ist von einer Haube 13 umgeben, wobei ein Haubenabschnitt 14 schwenkbar im verbleibenden Haubenkörper 15 gelagert ist und insofern die Haube 13 geöffnet werden kann.

Nachfolgend wird der Aufbau und die Wirkungsweise der jeweiligen Förder-Dreh-Station 10 bzw. 11 beschrieben:

In einem im Träger 12 gelagerten Grundgestell 16 der Förder-Dreh-Station 10 bzw. 11 ist ein horizontal umlaufender Förderer 17, der als Förderband ausgebildet ist, gelagert. Das Förderband 17 ist um zwei Umlenkrollen 18 und 19 geführt, wobei die Umlenkrolle 18, die oberhalb der zweiten Fördereinrichtung 3 angeordnet ist, mittels eines Servomotors 20 antreibbar ist, der mit dem Grundgestell 16 verflanscht ist. Mit dem Förderband 17 sind zwei Dreheinrichtungen 21 verbunden, wobei der Abstand der beiden Dreheinrichtungen 21 der jeweiligen Förder-Dreh-Station 10 bzw. 11 etwa der halben Umlaufstrecke des Förderbandes 17 entspricht, die Abstände der beiden Dreheinrichtungen 21 dieser Förderdrehstationen somit, in beiden Richtungen, gleich sind. Befindet sich somit die eine Dreheinrichtung 21 im Bereich des der Umlenkrolle 18 zugewandten Endes der Förder-Dreh-Station 10 bzw. 11, dann befindet sich die andere Umlenkrolle 19 dieser Förder-Dreh-Station im Bereich deren anderen Endes, das der Umlenkrolle 19 zugewandt ist.

Beim Umlaufen des Förderbandes 17 werden die Dreheinrichtungen 21 der jeweiligen Förder-Dreh-Station 10 bzw. 11 beim Bewegen in der in Figur 1 mit dem Pfeil veranschaulichten "Laufrichtung" (der zu fördernde Gegenstände) zwischen den beiden Förderbändern 17 der beiden Förder-Dreh-Stationen 10 und 11 bewegt, hingegen bei deren Rückführbewegung entgegen der genannten Laufrichtung befinden sich die Dreheinrichtungen 21 auf der Außenseite 22 der jeweiligen Förder-Dreh-Station 10 bzw. 11. Beim Bewegen der Dreheinrichtungen 21 zwischen den beiden Förderbändern 17 der beiden Förder-Dreh-Stationen 10 und 11 werden die Dreheinrichtungen 21 in der Ebene B-B bewegt, die senkrecht zur Zeichnungsebene gemäß Figur 2 positioniert ist, entlang derselben Förderstrecke.

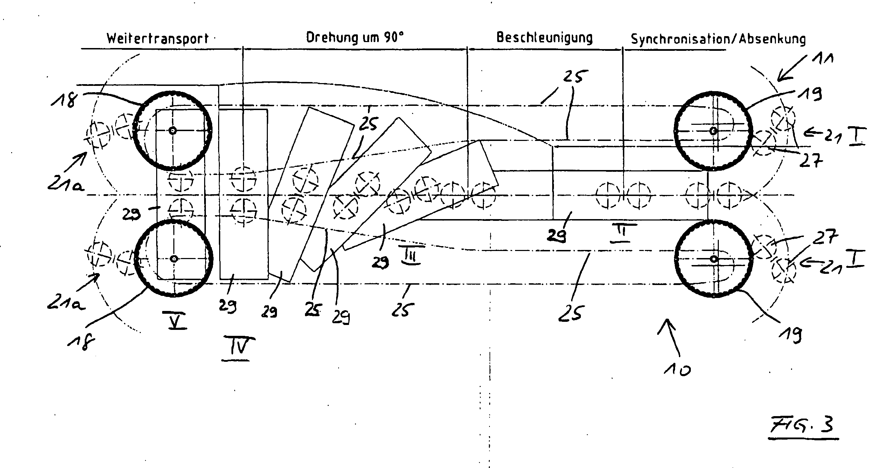

Die jeweilige Dreheinrichtung 21 weist, beispielsweise entsprechend der Ausführungsform, die in der EP 1 020 359 A2 beschrieben ist, eine vertikal angeordnete Führungsstange 23 auf, die vertikal senkbar und hebbar ist, wobei das Heben und Senken der Führungsstange 23 mittels der bekannten Kulissenführung erfolgt. Die Führungsstange 23 ist nicht nur heb- und senkbar, sondern gleichfalls über eine weitere, an sich bekannte Kulissenführung um 90° um die vertikale Achse 24 schwenkbar (die Kontur der Kulissenführung ist in der Figur 3 mit der Bezugsziffer 25 veranschaulicht). Im Bereich seines unteren Endes weist die jeweilige Führungsstange 23 eine Aufnahme 26 auf, die ihrerseits, im Bereich ihres unteren Endes zwei Sauger 27 aufnimmt. Diese Sauger sind beispielsweise mittels einer Luftdurchführung in der Führungsstange 23 mit einem zentralen Unterdruckluftanschluss verbunden. Auch dieser ist an sich bekannt; insofern wird auf die EP 1 020 359 A2 verwiesen.

Somit wird in an sich bekannter Art und Weise beim Umlauf der Dreheinrichtung 1 einer Förder-Dreh-Station 10 bzw. 11 die Dreheinrichtung 21 mit ihren beiden Saugern 27 beim Umlaufen des Förderriemens 6 zunächst auf die obere Fläche 28 eines quaderförmigen Gegenstandes 29, z. B. einer Faltschachtel abgesenkt, dann werden, beim Fördern des Gegenstands 29 in der in Figur 1 verdeutlichten Laufrichtung mittels der für die Drehbewegung verantwortlichen Kulissenführung die Führungsstange 23 und damit die beiden Sauger 27 gedreht, in eine um 90° veränderte Drehposition der Führungsstange 23, anschließend wird der gedrehte Gegenstand 29 im Bereich der zweiten Fördereinrichtung 3 wieder losgelassen; es werden die Sauger 27 wieder vom Gegenstand angehoben, es erfolgt der Weitertransport des Gegenstandes mittels der zweiten Fördereinrichtung 3, dann wird die Dreheinrichtung 23 mittels des Förderbandes 17 wieder in die Ausgangsposition zum Kontaktieren eines weiteren Gegenstandes 29 überführt.

Die erfindungsgemäße Vorrichtung unterscheidet sich von dem vorstehend als bekannt Vorrausgesetzten bereits dadurch, dass zwischen den beiden Fördereinrichtungen 1 und 3 die Platte 2 vorgesehen ist, im Bereich deren die Drehung des Gegenstandes, und zwar wenn er auf der Platte 2 aufliegt, erfolgt.

Die erfindungsgemäße Vorrichtung weist ferner im Zugangsbereich 30 der beiden Förderdrehstationen 10 und 11 eine Lichtschranke 31 auf, deren Lichtstrahl sich senkrecht zur Blattebene der Zeichnung der Figur 1 erstreckt, somit quer zur Förderrichtung des Gegenstandes 29 beim Zufördern zu den beiden Förder-Dreh-Stationen 10 und 11. Die Lichtschranke dient dem Erfassen der Position des nächsten, von der jeweiligen Förder-Dreh-Station 10 bzw. 11 zu kontaktierenden und fördernden Gegenstandes 29. Die Lichtschranke 31 steuert dabei die Servomotoren 20 derart an, dass bei der Erfassung des vorlaufenden Gegenstandes 29 die Lichtschranke 31 den einen Servomotor 20, beispielsweise den Servomotor der Förder-Dreh-Station 10 ansteuert, hingegen bei Erfassung des diesem vorlaufenden Gegenstand 29 unmittelbar folgenden Gegenstandes 29 die Lichtschranke 31 den Servomotor 20 der anderen Förder-Dreh-Station 11 ansteuert. Beide Servomotoren 20 sind mit einem Absolutwertgeber ausgestattet.

Die Figur 2 zeigt deshalb nur drei der vier Dreheinrichtungen 21 der beiden Förder-Dreh-Stationen 10 und 11, weil die eine, zwischen den beiden Förderbändern 17 der beiden Förder-Dreh-Stationen 10 und 11 angeordnete Dreheinrichtung 21 die andere dort befindliche Dreheinrichtung verdeckt.

Figur 1 veranschaulicht nur für eine der beiden Förder-Dreh-Stationen, vorliegend die Förder-Dreh-Station 10, einen Teilzyklus einer der beiden dort vorgesehenen Dreheinrichtungen 21, nämlich beginnend bei der rechts dargestellten Warteposition I, folgend die Position II, in der die Dreheinrichtung 21 zwischen die beiden Förderbänder 17 eingeschwenkt ist und die Synchronisation und Absenkung der Sauger 27 auf den Gegenstand stattgefunden hat. In den Positionen I und II befindet sich die Dreheinrichtung 21 oberhalb der ersten Fördereinrichtung. Es folgt die Position III, bei der die Drehung des Gegenstandes 29 um 90° aus der Längsposition in die Querposition, bezogen auf die Laufrichtung gemäß Figur 1, stattfindet, die Position IV in der die Drehung des Gegenstandes 29 abgeschlossen ist und sich dieser bereits wieder im Bereich der zweiten Fördereinrichtung 3 befindet, die Position V in der die Dreheinrichtung 21 mit den Saugern 27 bereits in die angehobene Position überführt ist, schließlich die Position VI die das Rückführen der Dreheinrichtung 21 in die Warteposition 1 entlang der Außenseite 22 der Förder-Dreh-Station 10 veranschaulicht.

Die Figur 3 veranschaulicht den Drehvorgang und die kinematischen Verhältnisse beim Drehen eines Gegenstandes 26. Zur Verdeutlichung sind in dieser Figur die beiden Dreheinrichtungen jeder Förder-Dreh-Station 10 bzw. 11 veranschaulicht. In dieser Figur ist für die Warteposition der Dreheinrichtung 21 der einen Förder-Dreh-Station 10 bzw. 11 die Position der anderen Dreheinrichtung veranschaulicht, wobei diese Dreheinrichtung mit der Bezugsziffer 21 a versehen ist. Aus dieser Bezifferung wird deutlich, dass der Abstand der beiden Dreheinrichtungen 21 und 21 a der jeweiligen Förder-Dreh-Station 10 bzw. 11 etwa der halben Umlaufstrecke des Förderers entspricht.

Die jeweilige Förder-Dreh-Station 10 bzw. 11 ist mittels des eigenen, in der Drehzahl regelbaren Servomotors 20 antreibbar. Erfasst die Lichtschranke 31 im Zugangsbereich 30 der beiden Förder-Dreh-Stationen 10 und 11 einen Gegenstand 26, der vorliegend längs, somit in Laufrichtung gemäß Figur 1 orientiert ist, wird durch Ansteuerung des Servomotors 20 der Förder-Dreh-Station 10 deren Förderband 17 auf eine solche Umlaufgeschwindigkeit innerhalb kürzester Zeit beschleunigt, die der Fördergeschwindigkeit des Gegenstandes die auf Grund der Fördergeschwindigkeit der ersten Fördereinrichtung 1 bekannt ist, entspricht. Während dieser Synchronisationsphase beim Einführen der Dreheinrichtung 21 zwischen die beiden Förderbänder 17 der beiden Förderdrehstationen 10 und 11 erfolgt das Absenken der beiden Sauger 27 dieser Dreheinrichtung 21 auf die obere Fläche 28 des Gegenstands 29, der somit zwischen den mit gleicher Geschwindigkeit bewegten Saugern 27 und Förderriemen 8 der ersten Fördereinrichtung 1 gefördert wird. Es wird dann über eine Folgesteuerung der Servomotor 20 der anderen Förder-Dreh-Station 11 so angesteuert, dass unmittelbar die der ersten Fördereinrichtung 1 nähere Dreheinrichtung 21 dieser Förder-Dreh-Station 11 in die in Figur 3 veranschaulichte Warteposition I überführt wird und somit zum Erfassen des nächsten Gegenstands 29 zur Verfügung steht, wobei die Aktivierung wieder durch die Lichtschranke 31 erfolgt, die den nächsten Gegenstand erfasst. ― Der entsprechend der vorstehenden Beschreibung mittels der einen Dreheinrichtung 21 der Förder-Dreh-Station 10 erfasste Gegenstand 29 wird nun um 90° gedreht (siehe die Position III, auf die auch in der Figur 1 Bezug genommen ist), der um 90° gedrehte Gegenstand ist durch die Position IV veranschaulicht. Die Position V zeigt, gemäß der entsprechenden Positionen V in Figur 1, den gedrehten Gegenstand nach dem Anheben der Dreheinrichtung. Es erfolgt von dort der Weitertransport mittels der zweiten Fördereinrichtung 3. Im Abschnitt zwischen den Zuständen II und III erfolgt die Beschleunigung des Gegenstands 29. Der anschließend geförderte Gegenstand 29 wird mittels der Förder-Dreh-Station 11 entlang derselben Förderstrecke gefördert, wie der zuvor geförderte Gegenstand 29 mittels der Förder-Dreh-Station 10.

In der Figur 1 sind zusätzlich Oberläufer 32 und 33 veranschaulicht. Dem Oberläufer 32 kommt die Funktion zu, den Gegenstand 29 zwischen sich und der ersten Fördereinrichtung 1 zu positionieren, sodass der Gegenstand 29 definiert in den Zugangsbereich 30 überführt werden kann. Dem Oberläufer 33 kommt die Aufgabe zu, den gedrehten Gegenstand im Zusammenwirken mit der zweiten Fördereinrichtung 3 definiert abzufördern.

Das Verhältnis von Länge und Breite des zu transportierenden quaderförmigen Gegenstandes beträgt beispielsweise 2:1.

## Patentansprüche

1. Vorrichtung zum Fördern und Drehen von Gegenständen (29), insbesondere von quaderförmigen Gegenständen, um eine vertikale Achse, insbesondere zum Drehen von Gegenständen um 90°, mit einer ersten Fördereinrichtung (1) zum Fördern der Gegenstände in den Bereich mindestens einer Förder-Dreh-Station (10; 11), der Förder-Dreh-Station (10; 11) zum Fördern und Drehen der Gegenstände und einer zweiten Fördereinrichtung (3) zum Fördern der Gegenstände aus dem Bereich der Förder-Dreh-Station, wobei die Förder-Dreh-Station einen horizontal umlaufenden Förderer (17) und mindestens eine von diesem aufgenommene Dreheinrichtung (21) aufweist, sowie die jeweilige Dreheinrichtung (21) Mittel zum Kontaktieren und Drehen eines der Gegenstände (29) aufweist, ferner mit einem elektrischen Antrieb (20) für die Förder-Dreh-Station (10; 11), **gekennzeichnet durch** folgende Merkmale:
- die Vorrichtung weist zwei nebeneinander angeordnete Förder-Dreh-Stationen (10, 11) zum abwechselnden Fördern der Gegenstände (29) entlang derselben Förderstrecke auf,
- jede Förder-Dreh-Station (10;11) ist mittels eines eigenen, in der Drehzahl regelbaren Elektromotors (20; 20) antreibbar,
- im Zugangsbereich der Förder-Dreh-Stationen (10, 11) ist eine Einrichtung (31) zum Erfassen der Position des nächsten, von der jeweiligen Förder-Dreh-Station (10 bzw. 11) zu kontaktierenden und zu fördernden Gegenstandes (29) angeordnet, wobei die Erfassungseinrichtung (31) die Elektromotoren (20) derart ansteuert, dass bei Erfassung eines vorlaufenden Gegenstands (29) die Erfassungseinrichtung (31) den einen Elektromotor (20), bei Erfassung des diesem vorlaufenden Gegenstand (29) unmittelbar nachfolgenden Gegenstands (29) die Erfassungseinrichtung (31) den anderen Elektromotor (20) ansteuert.

2. Vorrichtung nach Anspruch 1, **dadurch gekennzeichnet, dass** der Elektromotor (20) als Servomotor ausgebildet ist, insbesondere als Servomotor mit einem Absolutwertgeber ausgebildet ist.

3. Vorrichtung nach Anspruch 1 oder 2, **dadurch gekennzeichnet, dass** die Elektromotoren (20) so angesteuert werden, dass unmittelbar nach dem Kontaktieren eines Gegenstandes (29) mittels einer Dreheinrichtung (21) der einen Förder-Dreh-Station (10 bzw. 11) eine Dreheinrichtung (21) der anderen Förder-Dreh-Station (11 bzw. 10) in eine Bereitschaftsstellung benachbart der Erfassungseinrichtung (31) verfahren wird.

4. Vorrichtung nach einem der Ansprüche 1 bis 3, **dadurch gekennzeichnet, dass** die erste Fördereinrichtung (1) und/oder die zweite Fördereinrichtung (2) mittels eines Elektromotors (7) antreibbar ist, insbesondere mittels eines in der Drehzahl regelbaren Elektromotors antreibbar ist.

5. Vorrichtung nach einem der Ansprüche 1 bis 4, **dadurch gekennzeichnet, dass** die Erfassungseinrichtung (31) als Lichtschranke ausgebildet ist.

6. Vorrichtung nach einem der Ansprüche 1 bis 5, **dadurch gekennzeichnet, dass** der jeweilige Förderer (17) zwei von diesen aufgenommenen Dreheinrichtungen (21) aufweist, insbesondere zwei Dreheinrichtungen (21), deren Abstand der halben Umlaufstrecke des Förderers (17) entspricht.

7. Vorrichtung nach einem der Ansprüche 1 bis 6, **dadurch gekennzeichnet, dass** das jeweilige Mittel zum Kontaktieren der Gegenstände (29) saugend wirksam ist, insbesondere das Mittel zwei in Kontakt mit der oberen Fläche (28) des jeweiligen Gegenstandes (29) bringbare Sauger (27) aufweist.

8. Vorrichtung nach einem der Ansprüche 1 bis 7, **dadurch gekennzeichnet, dass** zwischen der ersten Fördereinrichtung (1) und der zweiten Fördereinrichtung (3) eine Platte (2) angeordnet ist, wobei im Bereich der Platte (2) das Drehen des jeweiligen Gegenstandes (29) erfolgt, insbesondere bei auf der Platte (2) aufliegendem Gegenstand (29) erfolgt.

9. Vorrichtung nach einem der Ansprüche 1 bis 8, **dadurch gekennzeichnet, dass** der jeweilige-Gegenstand (29) um eine vertikale Achse gedreht wird, die durch den Schwerpunkt des Gegenstands (29) bzw. den Gesamtschwerpunkt des Gegenstandes und eines von diesem aufgenommenen Produkts verläuft.

10. Vorrichtung nach einem der Ansprüche 1 bis 9, **dadurch gekennzeichnet, dass** die erste Fördereinrichtung (1) und/oder die zweite Fördereinrichtung (3) als Förderband, insbesondere als beabstandet angeordnete Förderriemen (8, 8) ausgebildet ist.

## Claims

1. Apparatus for conveying and turning articles (29), in particular cuboid articles, about a vertical axis, in particular for turning articles by 90°, having a first conveying device (1) for conveying articles into the region of at least one conveying and turning station (10; 11), the conveying and turning station (10; 11) for conveying and turning the articles, and a second conveying device (3) for conveying the articles from the region of the conveying and turning station, the conveying and turning station having a horizontally circulating conveyor (17) and at least one turning device (21) held by the latter, and the respective turning device (21) having means for making contact with and turning one of the articles (29), further having an electric drive (20) for the conveying and turning station (10; 11), **characterized by** the following features:
- the apparatus has two juxtaposed conveying and turning stations (10, 11) for alternately conveying the articles (29) along the same conveying section,
- each conveying and turning station (10; 11) can be driven by means of a dedicated electric motor (20; 20) whose speed can be regulated, and
- a device (31) for detecting the position of the next article (29) which the respective conveying and turning station (10 or 11 respectively) is to make contact with and convey is arranged in the access region of the conveying and turning stations (10, 11), the detecting device (31) driving the electric motors (20) in such a way that upon detection of an article (29) running ahead the detecting device (31) drives one electric motor (20), while upon detection of the article (29) immediately following this article (29) running ahead the detecting device (31) drives the other electric motor (20).

2. Apparatus according to Claim 1, **characterized in that** the electric motor (20) is designed as a servomotor, in particular is designed as a servomotor with an absolute value encoder.

3. Apparatus according to Claim 1 or 2, **characterized in that** the electric motors (20) are driven such that immediately after a turning device (21) of one conveying and turning station (10 or 11, respectively) has made contact with an article (29), a turning device (21) of the other conveying and turning station (11 or 10, respectively) is moved into a ready position next to the detecting device (31).

4. Apparatus according to one of Claims 1 to 3, **characterized in that** the first conveying device (1) and/or the second conveying device (2) can be driven by means of an electric motor (7), in particular can be driven by means of an electric motor whose speed can be regulated.

5. Apparatus according to one of Claims 1 to 4, **characterized in that** the detecting device (31) is designed as a light barrier.

6. Apparatus according to one of Claims 1 to 5, **characterized in that** the respective conveyor (17) has two of these held turning devices (21), in particular two turning devices (21) whose spacing corresponds to half the circulating section of the conveyor (17).

7. Apparatus according to one of Claims 1 to 6, **characterized in that** the respective means coming into contact with the articles (29) has a sucking action, in particular the means has two suckers (27) which can be brought into contact with the upper surface (28) of the respective article (29).

8. Apparatus according to one of Claims 1 to 7, **characterized in that** a plate (2) is arranged between the first conveying device (1) and the second conveying device (3), the turning of the respective article (29) being performed in the region of the plate (2), in particular being performed with the article (29) lying on the plate (2).

9. Apparatus according to one of Claims 1 to 8, **characterized in that** the respective article (29) is turned about a vertical axis which runs through the centroid of the article (29) or the overall centroid of the article and a product held by the latter.

10. Apparatus according to one of Claims 1 to 9, **characterized in that** the first conveying device (1) and/or the second conveying device (3) is designed as a band conveyor, in particular as conveyor belts (8, 8) arranged spaced apart.

## Revendications

1. Dispositif pour transporter et faire tourner des articles (29), notamment des articles parallélépipédiques, autour d'un axe vertical, notamment pour faire tourner des articles de 90°, comprenant un premier dispositif de transport (1) pour transporter les articles dans la région d'au moins un poste de transport et de rotation (10 ; 11), ledit poste de transport et de rotation (10 ; 11) pour transporter et faire tourner les articles et un deuxième dispositif de transport (3) pour transporter les articles depuis la région du poste de transport et de rotation, le poste de transport et de rotation présentant un transporteur entraîné horizontalement (17) et au moins un dispositif de rotation (21) reçu par celui-ci, le dispositif de rotation respectif (21) présentant des moyens pour entrer en contact avec l'un des articles (29) et le faire tourner, et le dispositif comprenant en outre un entraînement électrique (20) pour le poste de transport et de rotation (10 ; 11), **caractérisé par** les caractéristiques suivantes :
- le dispositif présente deux postes de transport et de rotation (10, 11) disposés l'un à côté de l'autre pour le transport en alternance des articles (29) le long de la même section de transport,
- chaque poste de transport et de rotation (10, 11) peut être entraîné au moyen d'un moteur électrique propre (20 ; 20) de vitesse réglable,
- dans la région d'accès des postes de transport et de rotation (10, 11) est disposé un dispositif (31) pour détecter la position de l'article suivant (29) devant entrer en contact avec le poste de transport et de rotation (10, 11) respectif et être transporté par lui, le dispositif de détection (31) commandant les moteurs électriques (20) de telle sorte qu'à la détection d'un article (29) avançant en premier, le dispositif de détection (31) commande l'un des moteurs électriques (20), et à la détection de l'article (29) immédiatement suivant cet article avançant en premier (29), le dispositif de détection (31) commande l'autre moteur électrique (20).

2. Dispositif selon la revendication 1, **caractérisé en ce que** le moteur électrique (20) est réalisé sous forme de servomoteur, notamment sous forme de servomoteur avec un générateur de valeur absolue.

3. Dispositif selon la revendication 1 ou 2, **caractérisé en ce que** les moteurs électriques (20) sont commandés de telle sorte qu'immédiatement après la mise en contact d'un article (29) au moyen d'un dispositif de rotation (21) de l'un des postes de transport et de rotation (10 ou 11), un dispositif de rotation (21) de l'autre des postes de transport et de rotation (11 ou 10) soit déplacé dans une position de disponibilité à côté du dispositif de détection (31).

4. Dispositif selon l'une quelconque des revendications 1 à 3, **caractérisé en ce que** le premier dispositif de transport (1) et/ou le deuxième dispositif de transport (2) peuvent être entraînés au moyen d'un moteur électrique (7), notamment au moyen d'un moteur électrique de vitesse réglable.

5. Dispositif selon l'une quelconque des revendications 1 à 4, **caractérisé en ce que** le dispositif de détection (31) est réalisé sous forme de barrière lumineuse.

6. Dispositif selon l'une quelconque des revendications 1 à 5, **caractérisé en ce que** le transporteur respectif (17) présente deux dispositifs de rotation (21) reçus par celui-ci, notamment deux dispositifs de rotation (21), dont la distance correspond à la demi-distance périphérique du transporteur (17).

7. Dispositif selon l'une quelconque des revendications 1 à 6, **caractérisé en ce que** le moyen respectif pour venir en contact avec les articles (29) agit par aspiration, notamment ce moyen présente deux dispositifs d'aspiration (27) pouvant être amenés en contact avec la surface supérieure (28) de l'article respectif (29).

8. Dispositif selon l'une quelconque des revendications 1 à 7, **caractérisé en ce qu'**une plaque (2) est disposée entre le premier dispositif de transport (1) et le deuxième dispositif de transport (3), la rotation de l'article respectif (29) ayant lieu dans la région de la plaque (2), notamment lorsque l'article (29) se trouve sur la plaque (2).

9. Dispositif selon l'une quelconque des revendications 1 à 8, **caractérisé en ce que** l'article respectif (29) est tourné autour d'un axe vertical qui s'étend à travers le centre de gravité de l'article (29) ou le centre de gravité total de l'article et d'un produit reçu par celui-ci.

10. Dispositif selon l'une quelconque des revendications 1 à 9, **caractérisé en ce que** le premier dispositif de transport (1) et/ou le deuxième dispositif de transport (3) sont réalisés sous forme de bande transporteuse, notamment sous forme de courroies transporteuses (8, 8) disposées à distance l'une de l'autre.
